# EUROPÄISCHE PATENTSCHRIFT

(11) **EP 0 751 813 B1**
(45) Veröffentlichungstag und Bekanntmachung des Hinweises auf die Patenterteilung: **21.01.1998**
(21) Anmeldenummer: 95903321.8
(22) Anmeldetag: 05.12.1994
(51) Int. Cl.: B01D 29/15

(54) **FILTERELEMENT MIT STÜTZKÖRPER**
FILTER ELEMENT WITH SUPPORT MEMBER
ELEMENT FILTRANT AVEC CORPS D'APPUI

(30) Priorität: 23.03.1994 DE 4409970
(43) Veröffentlichungstag der Anmeldung: 08.01.1997
(73) Patentinhaber: HYDAC FILTERTECHNIK GmbH, D-66273 Sulzbach (DE)
(72) Erfinder: BIES, Peter, D-66740 Saarlouis (DE); JUNG, Artur, D-66287 Quierschied (DE); SAKRANCHINSKY, Michael, D-66386 St. Ingbert (DE); HAUSDORF, Jürgen, D-66130 Saarbrücken (DE)
(74) Vertreter: Bartels, Martin Erich Arthur
(86) Internationale Anmeldenummer: EP9404045
(87) Internationale Veröffentlichungsnummer: WO9525577

(56) Entgegenhaltungen:
- EP-A- 0 414 336
- WO-A-89/01358
- DE-A- 3 238 783
- DE-B- 2 608 618
- US-A- 4 526 688

## Beschreibung

Die Erfindung betrifft ein Filterelement mit einem Stützkörper gemäß den Merkmalen des Oberbegriffes des Anspruches 1.

Der Aufbau von Filterelementen variiert von Hersteller zu Hersteller. Bei einfachen Filterelementen aus Papier sind die Filtermatten ohne unterstützende Drahtgewebe hergestellt, so daß bei höheren Differenzdrücken an den Filterelementen die Filterfalten zusammengepreßt werden können mit der Folge, daß ein Teil des Filtermaterials für die Filtration ungenutzt bleibt. Höherwertige Elemente haben demgegenüber einen mehrlagigen Mattenaufbau, wobei zur Erhöhung der wirksamen Filtrationsfläche die Matte plissiert oder gefaltet ist. Damit die Filtermatte, die auch als Filtervlies bezeichnet wird, bei den angesprochenen hohen Differenzdrücken nicht zusammengepreßt wird, ist bei den höherwertigen Elementen ein Stützkörper, meist in der Form eines Stützrohres, vorgesehen, an dem sich die Filtermatte fluidbeaufschlagt durch entsprechendes Anlegen abstützen kann. Die Größe der Durchlässe im Stützrohr ist dabei derart bemessen, daß jedenfalls das Filtergewebe der Filtermatte nicht in die Durchlässe gedrückt werden kann, was wiederum die Filtrationsleistung beeinträchtigen könnte.

Ein Teil der bisher verwendeten Stützkörper für Filterelemente weist ein massive, aus einem ebenen Zuschnitt erstelltes Stützrohr aus Metall auf, wobei für den Erhalt eines Korrosionsschutzes Edelstahl oder verzinkter Stahl zum Einsatz kommt. In das Stützrohr sind unter Bildung der Durchlässe kreisförmige Löcher in der Art einer Bohrung eingebracht. In der Regel ist das Stützrohr in der Durchflußrichtung des Fluids gesehen hinter der Filtermatte angeordnet, so daß die angesprochenen Durchlässe zum Durchströmen des bereits gefilterten Mediums meist von gefiltertem Hydrauliköl dienen. Bei den bekannten Stützkörpern ist die gesamte zur Verfügung stehende, durch die Löcher gebildete Durchflußfläche relativ gering und die abstützende Fläche relativ groß, was zwar eine gute Abstützung der Filtermatte ergibt, jedoch den Durchfluß behindert und mithin die Filtrationsleistung erniedrigt. Die Herstellung des Metall-Stützrohres in Form eines Hohlzylinders mit seinen kreisförmigen Durchlässen ist aufwendig und damit teuer in der Herstellung. Ferner wird aufgrund des massiven Aufbaues der bekannten Stützkörper das Filterelement ebenfalls schwer, was insbesondere bei groß aufbauenden Filterelementen nachteilig ist.

Durch die gattungsgemäße DE-A-32 38 783 ist bereits ein Filterelement mit einem Stützkörper bekannt, der aus Längs- und Querstegen in der Art eines Maschengitters aufgebaut ist, das die Durchlässe bildet und das sich an einem zylindrischen Tragkörper abstützt, der vergleichbar den eingangs erwähnten Stützrohren bei den bekannten Filterelementen ausgebildet ist. In der üblichen Filtrierrichtung gesehen, von außen nach innen, weist dieses bekannte Filterelement als Filtermatte einen Filterstrumpf auf, der sich an dem Stützrohr abstützen kann, welches sich wiederum an dem Tragkörper oder Tragrohr abstützt, das gleichfalls mit Durchlässen versehen ist.

Um eine weitere Aussteifung dieses Stütz- und Traggebildes zu erreichen, können innerhalb des Tragkörpers und mit diesem verbunden vier diametral zueinander angeordnete Stützwände vorgesehen sein, wobei immer zwei Stützwände mit einem kreisbogenförmigen Segment miteinander verbunden sind, welche unter axialem Abstand aufeinanderfolgend in Winkelrichtung versetzt angeordnet in der Art einer Schraubenlinie innerhalb des Verbundes angeordnet sind. Der Tragkörper ist wie die bisherigen Stützrohre aus Metall gebildet und der über diesem angeordnete Stützkörper besteht aus Kunststoffmaterial in Form von Polypropylen. Das aus Längs- und Querrippen gebildete Maschengitter des Stützkörpers weist zumindest nach außen hin noppenförmige Erhebungen auf, so daß der Filterstrumpf im Betrieb derart gelegt wird, daß an diesen Stellen ein dünnerer Filterkuchenabschnitt erhalten wird, bei welchem der Filterkuchen bei Gegenspülung des Filterelementes leicht aufbricht und der Filterstrumpf wirksam gereinigt ist. Dieses bekannte Filterelement mit Stützkörper benötigt für eine wirksame Abstützung zwei koaxial zueinander angeordnete Teile - rohrförmige Stütz- und Tragkörper - was das bekannte Filterelement teuer in der Herstellung und vom Gewicht her schwer werden läßt.

In der EP-A-0 414 336 ist ein Filterelement mit einem Stützkörper beschrieben, dessen Stützrohr einzelne auf axialen Abstand gehaltene Ringe aufweist. Diese Ringe sind mit Versteifungsstegen, die wahlweise innerhalb oder außerhalb des Stützkörpers angeordnet sind, über eine Schweißverbindung oder über eine separate Befestigungsvorrichtung fest verbunden. Die vorzugsweise aus Metall bestehenden Versteifungsstege weisen einen kreisrunden Querschnitt auf und lassen zwischen den Ringen große Durchtrittsflächen für das zu filternde Fluid frei. Die Versteifungsstege erlauben jedoch keine Fluidführung innerhalb des hohlzylinderartigen Stützkörpers für das Fluid, so daß bedingt durch Verwirbelungen und die damit einhergehenden Strömungswiderstände der freie Durchtritt behindert ist und den Vorteil großer Durchtrittsflächen nicht zur Wirkung kommen lassen.

Ausgehend von diesem Stand der Technik liegt der Erfindung die Aufgabe zugrunde, ein Filterelement mit einem sehr stabilen und drucksteifen Stützkörper zu schaffen, mit dem die Filtrationsleistung verbessert ist bei gleichzeitiger Gewichts- und Kostenreduzierung. Eine dahingehende Aufgabe löst ein Filterelement mit den Merkmalen des Anspruches 1.

Aufgrund der erfindungsgemäßen Lösung steht segmentweise zwischen den Ringen bei gleichzeitig sehr guter Abstützung der Filtermatte eine sehr große Durchlaßfläche zur Verfügung, was den Durchflußwiderstand verringert und mithin die Filtrationsleistung des Filterelementes erhöht.

Es hat sich gezeigt, daß bei der Innenabstützung der in sich geschlossenen Ringe unmittelbar über die Stützwände und die Versteifungsstege, die mit diesen verbunden sind, sowohl die Ringe als auch die Stützwände sowie die Versteifungsstege selbst im Materialverbrauch ausgesprochen sparsam ausgelegt sein können und dennoch eine hohe Festigkeit für den Stützkörper ergeben, so daß eine sichere Abstützung der Filtermatte auf dem Stützkörper gewährleistet ist. Dabei ist es für die Filtrationsleistung unschädlich, wenn die im Inneren des Stützrohres angebrachten Stützwände dieses in einzelne Kammern oder Segmente unterteilen, wobei für den Fluidstrom nach Passieren der Durchlässe im Inneren des Stützkörpers eine Art strömungsgünstige Kanalführung erfolgt.

Für einen Fachmann ist es überraschend, daß, wenn er für den Stützkörper die sonst üblichen Lösungen aufgibt, durch das Abstützen einer Vielzahl von in sich geschlossenen Ringen in der Art eines separaten Bauteiles von innen her mit den Stützwänden und den Versteifungsstegen zu einer Konstruktion gelangt, die ein Mehrfaches an Aussteifung gegenüber bekannten Lösungen bietet. Das erfindungsgemäße Filterelement mit seinem Stützkörper bildet aber nicht nur eine ausgesprochen drucksteife Konstruktion, sondern läßt sich aufgrund des Ringaufbaues bei geringer Teileanzahl auch kostengünstig fertigen, was insgesamt die Herstellkosten für ein Filterelement senkt.

Die Vorzüge des erfindungsgemäßen Filterelementes mit Stützkörper gegenüber den bisher bekannten Vorrichtungen werden insbesondere dann deutlich, wenn der Stützkörper aus Metall mittels eines Druckgußverfahrens oder vorzugsweise aus Kunststoff mittels eines Kunststoff-Spritzverfahrens hergestellt wird. Es ist für den Fachmann weiter überraschend, daß beim Einsatz von Kunststoff mit geringem Eigengewicht gegenüber den bisherigen Metallkonstruktionen für den Stützkörper die Festigkeitswerte ausreichen, selbst bei hohen Druckspitzen und wechselnden Volumenströmen des Mediums, die Filtermatte sicher abzustützen, wobei sich gezeigt hat, daß bei entsprechender Aussteifung der Ringe über die im Inneren des Stützkörpers verlaufenden Stützwände Verformungen unschädlich sind, die im übrigen in Abhängigkeit des zum Einsatz gebrachten Kunststoffmaterials und seiner Elastizität nach Wegnahme der Belastung sich wieder rückverformen und die ursprüngliche rohrförmige Gestalt des Stützkörpers wieder gegeben ist.

Als besonders vorteilhaft hat es sich erwiesen, drei Stützwände vorzusehen, die in der Längsachse des Stützrohres miteinander verbunden sind, wobei zwei benachbart gegenüberliegende Stützwände einen Winkel von 120° miteinander begrenzen. Bei dieser Ausgestaltung der Stützwände in der Art eines Dreibeines sind mit geringem Materialeinsatz hohe Steifigkeitswerte für die Abstützung des Ringaufbaues erreichbar.

Bei einer besonders bevorzugten Ausführungsform des erfindungsgemäßen Stützkörpers sind die Versteifungsstege im Querschnitt rechteckförmig ausgebildet, die jeweils im gleichen Abstand voneinander und zu den Stützwänden angeordnet längs der Ringe zumindest teilweise in das Innere der Kammern vorstehen. Die Versteifungsstege bilden jeweils eine Art Biegebalken aus, die endseitig im Stützkörper definiert festlegbar sind und die dann insbesondere die im Stützkörper im wesentlichen mittig angeordneten Ringe bei hoher Beanspruchung der Filtermatte mit abstützen. Vorzugsweise sind hierbei zwischen zwei einander benachbart gegenüberliegenden Stützwänden drei eine Gruppe bildende Versteifungsstege vorhanden, wobei es bei hohen Beanspruchungen vorgesehen sein kann, daß der mittlere Versteifungssteg einer Dreiergruppe eine größere Stegquerschnittsfläche aufweist als die anderen Stege der Gruppe. Neben dem angesprochenen rechteckförmigen Querschnitt für einen Versteifungssteg können auch andere Querschnittsformen Verwendung finden, insbesondere solche, die in Lastaufnahmerichtung ein hohes Widerstandsmoment ausbilden.

Bei einer weiteren bevorzugten Ausführungsform des erfindungsgemäßen Stützkörpers ist es vorgesehen, daß die Versteifungsstege in Längsrichtung des Stützkörpers zu ihren Enden hin im Querschnitt verkleinert sind. Hierdurch ergeben sich definierte Einspannstellen für die einzelnen Biegebalken.

Bei einer weiteren bevorzugten Ausführungsform des erfindungsgemäßen Stützkörpers besteht zumindest das Stützrohr aus einem Kunststoff, der nach einem Kunststoff-Spritzverfahren verarbeitbar ist, wobei der Kunststoff für das Stützrohr zumindest teilweise elektrisch leitend ist, insbesondere aus Carbonmaterial besteht oder damit beschichtet ist. Hierdurch können elektrostatische Aufladungen vermieden werden, insbesondere, wenn das Stützrohr von einer nicht elektrisch leitenden Flüssigkeit durchströmt wird.

Bei einer besonders bevorzugten Ausführungsform des erfindungsgemäßen Stützkörpers ist das Stützrohr endseitig mit ringartigen Abschlußkappen versehen, die zwischen sich die Filtermatte aufnehmen und von denen mindestens eine Abschlußkappe mittels eines Dichtmittels das Innere des Stützrohres gegenüber der Umgebung abdichtet. Hierdurch ergibt sich eine leicht handhabbare Baueinheit, die unmittelbar in ein Filtergehäuse od.dgl. einsetzbar ist.

Im folgenden wird der erfindungsgemäße Stützkörper anhand der Zeichnung näher erläutert.

Es zeigen, in prinzipieller und nicht maßstäblicher Darstellung,
- Fig.1: eine Draufsicht auf das Stützrohr mit aufgesetzter Abschlußkappe;
- Fig.2: teilweise in Ansicht, teilweise im Schnitt dargestellt eine Abbildung längs der Linie II - II in Fig.1;
- Fig.3: eine Seitenansicht des Stützrohres;
- Fig.3a: eine um 90° entgegen dem Uhrzeigersinn gegenüber der Abbildung in der Fig.3 versetzt angeordnete Draufsicht;
- Fig.4: einen Längsschnitt durch ein Filtergehäuse mit aufgenommenem Filterelement.

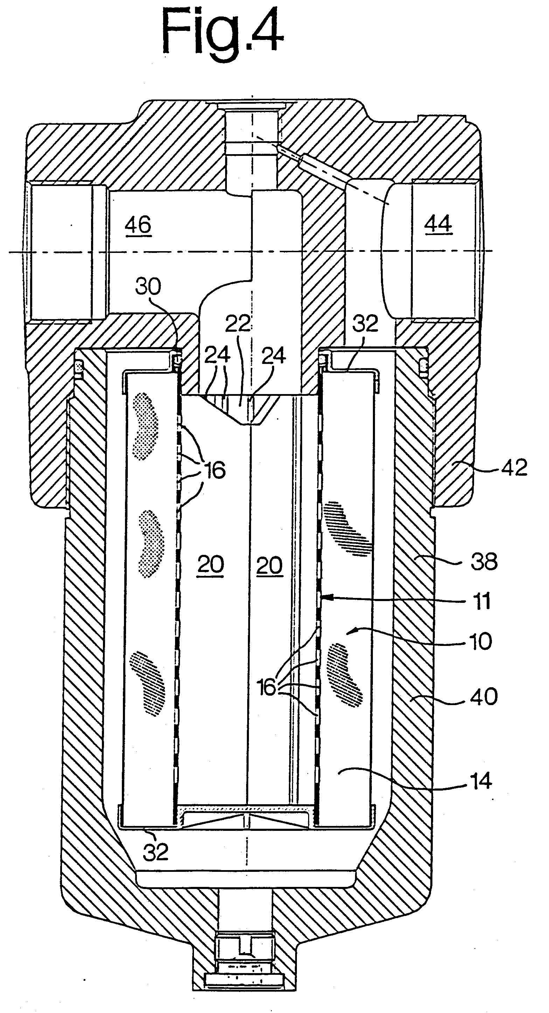

Der als Ganzes mit 11 bezeichnete Stützkörper für ein als Ganzes in der Fig.4 mit 10 bezeichnetes Filterelement weist ein Stützrohr 12 auf, das in Anlage mit einer Filtermatte 14 bringbar ist, die zum Filtrieren eines verschmutzten Mediums, insbesondere eines Fluids, wie Hydrauliköl, dient. Für das Durchströmen des mittels der Filtermatte 14 gefilterten Mediums ist das Stützrohr 12 mit Durchlässen 16 versehen. Der Einfachheit halber sind nicht alle vorhandenen Durchlässe mit der Bezugsziffer 16 in der Zeichnung wiedergegeben.

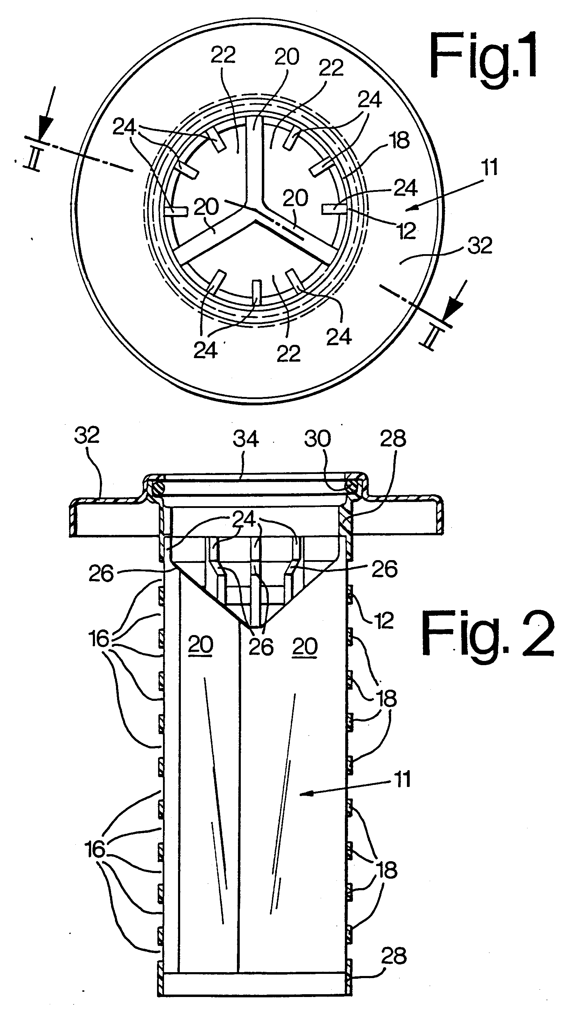

Unter Bildung der Durchlässe 16 weist das Stützrohr 12 einzelne Ringe 18 auf, die einen vorgebbaren axialen Abstand voneinander einnehmen. Sämtliche Ringe 18 sind insbesondere auch im Hinblick auf ihre Breite im wesentlichen gleich ausgebildet. Die in sich geschlossenen Ringe 18 stützen sich an Stützwänden 20 ab, umfassen diese von außen her und sind fest mit diesen verbunden. Diese Stützwände 20 unterteilen das Innere des Stützrohres 12 in einzelne Kammern 22. Die Stützwände 20 bilden durchgehende Flächen aus, wobei, wie dies insbesondere die Fig.1 und 2 zeigen, zwischen den Stützwänden 20 und mit den Ringen 18 verbunden Versteifungsstege 24 in der Art eines Biegebalkens vorgesehen sind. Sowohl die Stützwände 20 als auch die Versteifungsstege 24 verlaufen in Längsrichtung des Stützrohres 12 gesehen durchgehend.

Bei der vorliegenden Ausführungsform des erfindungsgemäßen Stützkörpers 11 sind drei Stützwände 20 und mithin auch drei Kammern 22 vorhanden. Die drei Stützwände 20 sind in der Längsachse des Stützrohres 12 miteinander verbunden und zwei benachbart gegenüberliegende Stützwände 20 begrenzen einen Winkel von etwa 120° miteinander. In der Längsachse des Stützrohres 12 kann auch in der Art einer Längsbohrung bei einer abgewandelten Ausführungsform (nicht dargestellt) des Stützkörpers 11 eine Ausnehmung vorhanden sein, was aufgrund der Verbreiterung der Anschlußstelle zwischen den Stützwänden 20 zu einer Erhöhung der Festigkeit der Gesamtkonstruktion mit beitragen kann.

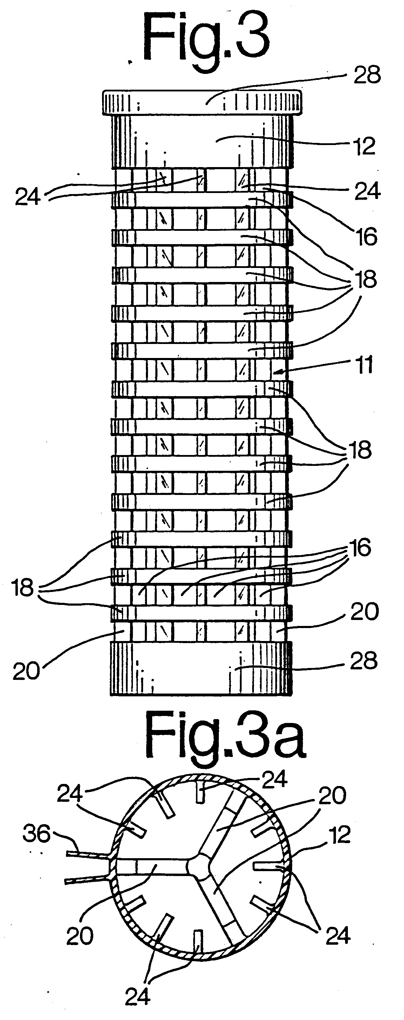

Wie insbesondere die Fig.1 zeigt, sind die einzelnen Versteifungsstege 24 im Querschnitt rechteckförmig ausgebildet und in jeweils gleichem Abstand voneinander und zu den Stützwänden 20 angeordnet längs der Innenumfangsseite der Ringe 18 verteilt, wobei die Versteifungsstege 24 teilweise in das Innere der ihnen jeweils zugeordneten Kammer 22 vorstehen. Zwischen zwei einander benachbart gegenüberliegenden Stützwänden 20 sind drei eine Gruppe miteinander bildende Versteifungsstege 24 vorhanden. Wie insbesondere bei einer geänderten Ausführungsform nach der Fig.3a deutlich wird, kann der mittlere Versteifungssteg 24 einer Dreiergruppe zur Vergrößerung des Biegewiderstandsmomentes eine größere Stegquerschnittsfläche aufweisen als die beiden anderen benachbart gegenüberliegenden Stege 24 dieser Gruppe. Wie die Darstellung nach der Fig.2 verdeutlicht, sind die Versteifungsstege 24 in Längsrichtung des Stützkörpers 12 gesehen zu ihren Enden hin im Querschnitt reduziert, wobei an der Stelle des Querschnittüberganges eine Schräge 26 vorgesehen ist.

An den Stellen dieses verringerten Querschnittes sind die Versteifungsstege 24 jeweils endseitig radial von einem zylindrischen Abschlußstück 28 umfaßt, wobei das in der Fig.4 gesehen zuoberst angeordnete Abschlußstück 28 für die Aufnahme eines Dichtmittels in Form eines O-Ringes 30 an seinem freien Ende mit einer radialen Erweiterung versehen ist. Diese radiale Erweiterung mit dem aufgenommenen Dichtring 30 wird von einer Abschlußkappe 32 deckelartig abgedeckt, die ringartig ausgebildet ist und die eine kreisförmige Mittenausnehmung 34 für den Fluiddurchgang aufweist. In der Darstellung nach der Fig.2 ist nur eine Abschlußkappe 32 dargestellt. Wird jedoch das andere Ende des Stützrohres 12 mit seinem Abschlußstück 28 gemäß der Darstellung in der Fig.4 ebenfalls mit einer Abschlußkappe 32 versehen, ist eine Aufnahme gegeben, um die ringartige Filtermatte 14 zwischen den Abschlußkappen 32 aufzunehmen. Für diese Festlegemöglichkeit der Filtermatte 14 sind die Abschlußkappen 32 an ihren einander zugewandten Seiten flanschartig abgekröpft. Um das Anbringen der Filtermatte 14 auf dem Stützrohr 12 zu erleichtern, kann das Stützrohr 12 mit einer in Längsrichtung durchgehenden U- oder V-profilartigen Leiste 36 (s.Fig.3a) versehen sein, in die sich zum Festlegen die einander zugewandten Enden der Filtermatte 14 einbringen lassen.

Der Stützkörper 11 mit dem Stützrohr 12, den Abschlußkappen 32 sowie der Filtermatte 14 bildet im wesentlichen das als Ganzes mit 10 bezeichnete Filterelement aus, das als Baueinheit in ein Filtergehäuse 38 einsetzbar ist. Das in der Fig.4 dargestellte Filtergehäuse 38 besteht aus zwei Filtergehäuseteilen 40 und 42, wobei für einen Elementwechsel das untere Gehäuseteil 40 vom oberen Gehäuseteil 42 abschraubbar ist. Das obere Gehäuseteil 42 weist einen Zulauf 44 sowie einen Ablauf 46 auf, wobei über den Zulauf 44 das ungefilterte Medium in das untere Gehäuseteil 40 gelangt, dort von außen nach innen das Filterelement 10 durchströmt und hierbei gereinigt wird und anschließend über die inneren Kammern 22 des Stützrohres 12 sowie den Ablauf 46 aus dem Gehäuse 38 gelangt.

Das Stützrohr 12 mit seinen drei Stegen in Form der Stützwände 20 wird vorzugsweise mittels eines Kunststoff-Spritzverfahrens hergestellt. Sofern eine höhere Aussteifung erforderlich ist, können auch weitere Stege in Form von Stützwänden (nicht dargestellt), beispielsweise kastenartig, im Inneren des Stützkörpers angeordnet sein. Das Werkzeug zur Herstellung des Stützkörpers im Kunststoff-Spritzverfahren besteht im wesentlichen aus zwei Schalen, wobei die Ringe 18 und die komplette Außenform des Stützkörpers negativ in diesen jeweils halbseitig abgebildet sind. Das Werkzeug weist ferner auf der Seite des Stützkörpers, an der der O-Ring 30 anlegbar ist, einen kurzen Form-Kern auf, der die Ringnut für den O-Ring 30 sowie das benachbart angeordnete Abschlußstück 28 (sog. Keyport-Anschluß) abbildet. Ein langer Form-Kern des Werkzeuges, der aus Einzelstreben besteht, die nachher die Stützwände 20 und die Versteifungsstege 24 bilden, bildet mithin als Werkzeugteil die komplette innere Kontur des Stützkörpers 11 negativ ab und greift in zusammengebautem Zustand des Werkzeuges zur Führung in den angesprochenen kurzen Form-Kern ein.

Es eignen sich grundsätzlich alle für Spritzverfahren geeignete Kunststoffe, wobei diese auch elektrisch leitend sein können, was insbesondere dann vorteilhaft sein kann, wenn das Stützrohr 12 mit einer nicht elektrisch leitenden Flüssigkeit für einen Filtrationsvorgang durchströmt wird und die Gefahr statischer Aufladungen für das Filterelement 10 besteht.

## Patentansprüche

1. Filterelement (10) mit einem Stützkörper (11), der ein Stützrohr (12) aufweist, das in Anlage mit einer Filtermatte (14) bringbar ist und das zum Durchströmen eines gefilterten Mediums mit Durchlässen (16) versehen ist, die durch die axialen Abstände einzelner Ringe (18) des Stützkörpers (11) gebildet sind, die von durchgehende Flächen bildenden Stützwänden (20) abgestützt sind, die das Innere des Stützrohres (12) in einzelne Kammern (22) unterteilen, dadurch gekennzeichnet, daß der Stützkörper (11) derart drucksteif ausgebildet ist, daß er ausschließlich beim Durchströmen der Filtermatte (14) mit dem Medium diese abstützt, daß hierfür die jeweilige Stützwand (20) unmittelbar mit den Ringen (18) verbunden ist, daß der jeweilige Ring (18) mit seiner geschlossenen Ringform die Stützwände (20) umfangseitig von außen umgibt, daß zwischen den Stützwänden (20) und mit den Ringen (18) verbunden Versteifungsstege (24) vorgesehen sind und daß die Stützwände (20) und die Versteifungsstege (24) in Längsrichtung des Stützrohres (12) durchgehend verlaufen.

2. Filterelement nach Anspruch 1, dadurch gekennzeichnet, daß drei Stützwände (20) vorgesehen sind, die in der Längsachse des Stützrohres (12) miteinander verbunden sind, und zwei benachbart gegenüberliegende Stützwände (20) einen Winkel von 120° miteinander begrenzen.

3. Filterelement nach Anspruch 1 oder 2, dadurch gekennzeichnet, daß die Versteifungsstege (24) im Querschnitt rechteckförmig ausgebildet sind, die jeweils im gleichen Abstand voneinander und zu den Stützwänden (20) angeordnet längs der Ringe (18) zumindest teilweise in das Innere der Kammern (22) vorstehen.

4. Filterelement nach einem der Ansprüche 1 bis 3, dadurch gekennzeichnet, daß zwischen zwei einander benachbart gegenüberliegenden Stützwänden (20) drei eine Gruppe bildende Versteifungsstege (24) vorhanden sind.

5. Filterelement nach Anspruch 4, dadurch gekennzeichnet, daß der mittlere Versteifungssteg (24) einer Dreier-Gruppe eine größere Stegquerschnittsfläche aufweist als die anderen Stege (24) der Gruppe.

6. Filterelement nach einem der Ansprüche 1 bis 5, dadurch gekennzeichnet, daß die Versteifungsstege (24) in Längsrichtung des Stützkörpers (12) zu ihren Enden hin im Querschnitt verkleinert sind.

7. Filterelement nach einem der Ansprüche 1 bis 6, dadurch gekennzeichnet, daß zumindest das Stützrohr (12) aus einem Kunststoff besteht, der nach einem Kunststoff-Spritzverfahren verarbeitbar ist.

8. Filterelement nach Anspruch 7, dadurch gekennzeichnet, daß der Kunststoff für das Stützrohr (12) zumindest teilweise elektrisch leitend ist, insbesondere aus Carbon-Material besteht und damit beschichtet ist.

9. Filterelement nach einem der Ansprüche 1 bis 8, dadurch gekennzeichnet, daß das Stützrohr (12) einseitig mit ringartigen Abschlußkappen (32) versehen ist, die zwischen sich die Filtermatte (14) aufnehmen und von denen mindestens eine Abschlußkappe (32) mittels eines Dichtmittels (30) das Innere des Stützrohres (12) gegenüber der Umgebung abdichtet.

## Claims

1. Filter element (10) with a support body (11), which comprises a support tube (12), which can be brought into contact with a filter mat (14) and which for the through-flow of a filtered medium is provided with openings (16), which are formed by the axial intervals between individual rings (18) of the support body (11), which are supported by support walls (20) forming continuous surfaces, which divide the inside of the support tube (12) into individual chambers (22), characterized in that the support body (11) is constructed to be resistant to pressure so that when the medium flows through the filter mat (14), it exclusively supports the latter, that for this purpose the respective support wall (20) is connected directly to the rings (18), that the respective ring (18) with its closed annular shape surrounds the support walls (20) peripherally from the outside, that stiffening webs (24) are provided between the support walls (20) and connected to the rings (18) and that the support walls (20) and stiffening webs (24) extend continuously in the longitudinal direction of the support tube (12).

2. Filter element according to Claim 1, characterized in that three support walls (20) are provided, which are connected to each other along the longitudinal axis of the support tube (12) and two adjacent opposing support walls (20) define an angle of 120° with each other.

3. Filter element according to Claim 1 or 2, characterized in that the stiffening webs (24) are constructed with a rectangular cross section, which project along the rings (18) at least partly into the inside of the chambers (22), arranged respectively at equal distances apart and with respect to the support walls (20).

4. Filter element according to one of Claims 1 to 3, characterized in that three stiffening webs (24) forming a group are present between two adjacent opposing support walls (20).

5. Filter element according to Claim 4, characterized in that the central stiffening web (24) of a triple group has a greater web cross-sectional area than the other webs (24) of the group.

6. Filter element according to one of Claims 1 to 5, characterized in that the cross section of the stiffening webs (24) is reduced in the longitudinal direction of the support body (12) towards their ends.

7. Filter element according to one of Claims 1 to 6, characterized in that at least the support tube (12) consists of a synthetic material, which can be processed in accordance with a synthetic material injection moulding process.

8. Filter element according to Claim 7, characterized in that the synthetic material for the support tube (12) is at least partly electrically conducting, in particular it consists of carbon material and is coated therewith.

9. Filter element according to one of Claims 1 to 8, characterized in that the support tube (12) is provided on one side with ring-like closure caps (32), which receive the filter mat (14) between them and whereof at least one closure cap (32) by means of a sealing medium (30) seals the inside of the support tube (12) with respect to the atmosphere.

## Revendications

1. Élément filtrant (10) comprenant un corps d'appui (11), qui est muni d'un tube support (12), lequel peut entrer en contact avec une natte filtrante (14) et qui est muni d'orifices (16), par lesquels s'écoule un milieu filtré et qui sont formés par les distances axiales entre les différentes baques (18) du corps d'appui (11), lesquelles sont soutenues par des parois d'appui (20), qui forment des surfaces continues et qui partagent l'intérieur du tube support (12) en plusieurs chambres (22), caractérisé en ce que le corps d'appui (11) est conçu pour résister à la pression de sorte qu'il sert d'appui à la natte filtrante (14) uniquement lorsque le milieu passe à travers celle-ci, en ce que, à cet effet, chaque paroi de support (20) est assemblée directement avec les bagues (18), en ce que chaque bague (18), par sa forme circulaire fermée, entoure de l'extérieur la périphérie des parois de support (20), en ce il est prévu des nervures de renforcement (24) assemblées entre les parois de support (20) et avec les bagues (18) et en ce que les parois de support (20) et les nervures de renforcement (24) s'étendent en continu sur la longueur du tube support (12).

2. Élément filtrant selon la revendication 1, caractérisé en ce qu'il est prévu de réaliser trois parois de support (20), qui sont assemblées les unes avec les autres sur l'axe longitudinal du tube support (12), et deux parois de support (20) contiguës forment un angle de 120°.

3. Élément filtrant selon la revendication 1 ou 2, caractérisé en ce que les nervures de renforcement (24), qui présentent une section rectangulaire, sont disposées le long des bagues (18) à égale distance les unes des autres et par rapport aux parois de support (20) et au moins une partie desdites nervures de renforcement est en saillie vers l'intérieur des chambres.

4. Élément filtrant selon l'une quelconque des revendications 1 à 3, caractérisé en ce que trois nervures de renforcement (24) formant un groupe sont disposées entre deux parois de support contiguës.

5. Élément filtrant selon la revendication 1, caractérisé en ce que la nervure de renforcement (24) centrale d'un groupe de trois présente une section avec une surface supérieure à celle des autres nervures (24) du groupe.

6. Élément filtrant selon l'une quelconque des revendications 1 à 5, caractérisé en ce que les nervures de renforcement (24), considérées dans le sens longitudinal du corps d'appui (12), présentent une section plus petite à leurs extrémités.

7. Élément filtrant selon l'une quelconque des revendications 1 à 6, caractérisé en ce qu'au moins le tube support (12) est réalisé dans un matériau synthétique, qui a été formé par un procédé de moulage par injection.

8. Élément filtrant selon la revendication 7, caractérisé en ce que la matière synthétique utilisée pour le tube support (12) constitue au moins partiellement un conducteur électrique, réalisé en particulier dans un matériau de carbone et revêtu de ce matériau.

9. Élément filtrant selon l'une quelconque des revendications 1 à 8, caractérisé en ce que l'une des extrémités du tube support (12) est munie de capuchons de recouvrement (32) circulaires, entre lesquels est fixée la natte filtrante (14) et parmi lesquels au moins un capuchon de recouvrement (32) permet de rendre étanche l'intérieur du tube support (12) par rapport à l'environnement à l'aide d'un moyen d'étanchéité (30).
